# EUROPEAN PATENT APPLICATION

(11) **EP 4 847 816 A1**
(43) Date of publication of application: **02.12.2026**
(21) Application number: 25178879.0
(22) Date of filing: 26.05.2025
(51) Int. Cl.: F16L 7/00

(54) **ON-SITE APPLICABLE SPACERS FOR TUBES FOR TRENCHLESS INSTALLATION**

(71) Applicant: TDC International AG, 6004 Luzern (CH)
(72) Inventor: Welker, Ruirui, 6004 LUZERN (CH); Welker, Daniel, 6004 LUZERN (CH)
(74) Representative: Eisenführ Speiser

(57) **Abstract**

Spacing collar (10) that can be applied on-site directly before installation, comprised of at least two circumferential collar segments (12), each collar segment comprising a bracket segment (14) made of metal or composite plastic and a spacer shell segment (16) comprising composite plastic being attached to a respective bracket segment on the radially outward side. Each spacer shell (16) segment covers at least 50% of the respective bracket segment (14) in a shell-like manner. The bracket segment (14) comprises two connector sections (20) being configured to be fastened to one another.

## Description

The invention relates to an on-site applicable spacing collar for a tube for trench less installation.

Spacing collar or spacer collar are used with tubes or pipes that are installed in casing pipes, tunnels (e.g. microtunnels) or other existing hollow structures. Typically, spacing collars are applied to the outer surface of a carrier pipe that is introduced into a casing pipe, tunnel or similar structure. The spacers are fixed to the carrier pipe and are sliding on the inner surface of the casing pipe, tunnel or similar structure when the carrier pipe is introduced into the casing pipe, tunnel or similar structure that surrounds the carrier pipe in use. Spacing collars are inter alia known from EP 1 783 412 B1, US 5,592,975 A, US 6,571,832 B1, US 7,647,947 B1, US 9,039,044 B1, US 11,774,009 B2, WO 2001/081806 A1 and WO 2024/013669 A1.

It is an object to provide an easy to apply, durable spacing collar.

According to a first aspect of the invention, the object is achieved with an on-site applicable spacing collar comprised of at least two circumferential collar segments, each collar segment comprising a bracket segment made of metal or composite plastic material and a spacer segment comprising plastic material. Each spacer segment is attached to a respective bracket segment and extends radially outward from the respective bracket segment when the spacing collar is applied to a pipe. Each bracket segment comprises a carrier section that in use extends along a circumference of a cylindrical pipe. The spacer segment is attached to the carrier section of the bracket segment. The bracket segment comprises two connector sections. One connector section is arranged at one circumferential end of the carrier section while the other connected section is arranged at the other circumferential end of the connector section. The connector sections of the bracket segments are configured to be fastened to one another.

In a preferred embodiment, the connector sections each extend outwardly in a radial direction with respect to the spacing collar. Each connector section preferably comprises an aperture for receiving a screwing bolt for fastening the connector sections to one another.

According to another preferred embodiment, the bracket segments are provided with elastic pads that are arranged on an inner surface of a respective carrier section.

In a further preferred embodiment, the spacer shell segments are attached to the carrier sections of the respective bracket segments by way of fastening means such as screws or bolts.

According to a preferred embodiment, the spacing segments are made from a composite material, for instance a fibre reinforced plastic material that comprises a thermoset resin matrix and fibers embedded therein. The fibers preferably comprise glass fibers.

The connector section preferably comprises at least two holes that are spaced from each other in a radial direction of the spacing collar and that are configured for receiving a zip tie or a wire or the like for attaching a cable or tube to the connector section. Thus, the spacing collar can serve as a support for cables or a small tube arranged along a pipeline.

According to a second aspect, a spacing collar is provided that comprises at least one spacer shell or spacer shell segment. At least one spacer shell or spacer shell segment is at least partially made from fibre reinforced plastic material that is arranged adjacent to an outer surface of the spacing collar; i.e. the fibre reinforced plastic material forms an outer shell of the spacing collar. The fibre reinforced plastic material comprises a plastic matrix and fibres and optionally other materials. The second aspect can be implemented independently from the first aspect. In particular, a spacing collar according to the second aspect can be permanently attached to a pipe thereby forming an integral part of a pipe. According to a preferred embodiment of the second aspect, the fibres comprise at least one of glass fibres or basalt fibres.

Further preferred features and advantages will be apparent from the disclosure of exemplary embodiments. Additional aspects of the present invention will become more readily apparent from the detailed description, particularly when taken together with the drawings.
- Fig. 1:: illustrates a spacing collar that can be applied to a tube on-site;
- Fig. 2:: illustrates a spacing collar as shown in Figure 1 that holds a cable or a tube with glass fibers; and
- Figs. 3a and b:: illustrate, how the cable or tube can be attached to a bracket segment of the spacing collar.

Spacing collars are used when a tube shall be introduced in a casing pipe, tunnel or similar structure. The purpose of the spacing collar is to space the outside of the tube that is introduced in the casing tube, tunnel or similar structure from the inner wall of the casing pipe, tunnel or similar structure.

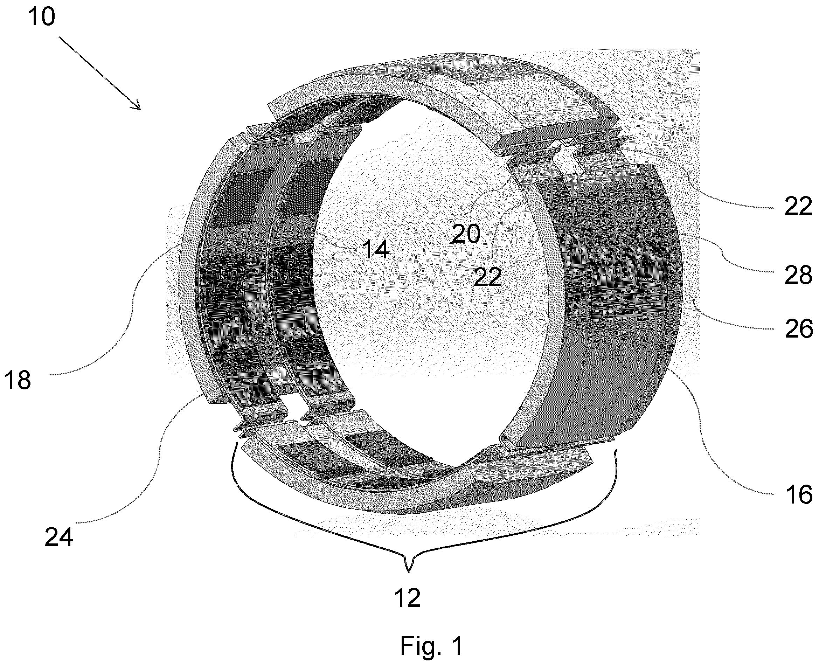

The spacer collar 10 of figure 1 can be applied to a tube when needed. Therefore there is no need to provide tubes that already are equipped with circumferential spacers. Instead, tubes with a plain outside surface can be used and equipped with the on-site applicable spacing collar 10 when needed.

The spacing collar 10 comprises four circumferential collar segments 12. In alternative embodiments, spacing collars with more or less circumferential collar segments may be provided for instance spacing collars with two or three circumferential collar segments or spacing collars with five or six circumferential collar segments.

Each collar segment 12 comprises a bracket segment 14 that preferably is made from metal or composite plastic material and a spacer shell segment 16 that preferably comprises composite plastic material.

The bracket segment 14 may comprise one or more bracket segment elements. In the embodiment illustrated in figure 1, the bracket segment 14 is comprised of two bracket segment elements 14.1 and 14.2 that are arranged in parallel to each other.

The bracket segment 14 comprises a carrier section 18 that carries the spacer shell segment 16 of the respective collar segment 12. The carrier segment 18 has a shape that corresponds to a cylinder segment and is dimensioned to match the outside dimensions of a cylindrical outer tube wall of a tube that shall be equipped with the spacing collar 10. A bending radius of the carrier section 18 of the bracket segment 14 of the spacing collar 10 may for instance be so to fit around a cylindrical outer tube wall with a diameter between 100 mm and 2500 mm, preferably between 250 mm and 1500 mm.

In the embodiment of Fig. 1, the two bracket segments 14.1 and 14.2 are both attached to the spacer shell segment 16 and thus are carrying the spacer shell segment 16 together. The bracket segments 14 are made of metal, for instance aluminum or steel or a composite plastic material, for instance fibre-reinforced plastic, while the spacer shell segments 16 preferably are made from fiber reinforced plastics (FRP). Preferably, the bracket segments 14 are made from sheet metal and have a thickness d of about 3 to 16 mm.

The spacer shell segment 16 has a radial extension of between 10 mm and 50 mm. The longitudinal extension of the spacing collar 10 along longitudinal direction of a tube to be equipped with the spacing collar 10 is between 50 mm and 1000 mm.

The collar segments 12 of spacing collar 10 are configured to be connected to each other. In order to connect the collar segments 12 to each other, each bracket segment 14 comprises a connector section 20 that extends from the circumferential ends of a respective bracket segment 14. The connector sections 20 extend in a radial direction with respect to the center of the spacing collar 10. The radial extension of the connector sections 20 is less than the radial extension of the spacer shell segments 16. Thus, only an outer surface 26 of each spacer shell segment 16 will touch an inner wall of a casing pipe if a tube equipped with the spacing collar is introduced in such casing pipe.

As can be seen in Fig. 1, it is preferred for the longitudinal edges of the outer surface 26 of each spacer shell segment 16 to have two bevels 28 at the respective longitudinal ends of the spacer shell segment.

The connector sections 20 each have at least one aperture 22 that serves for receiving a bolt for connecting the connector sections 20 of different collar segments 12 to one another.

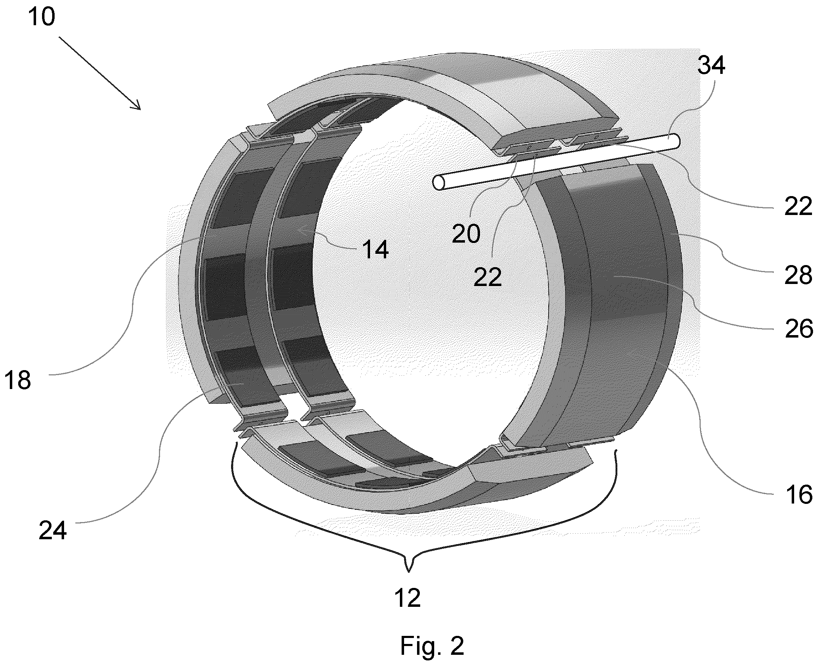

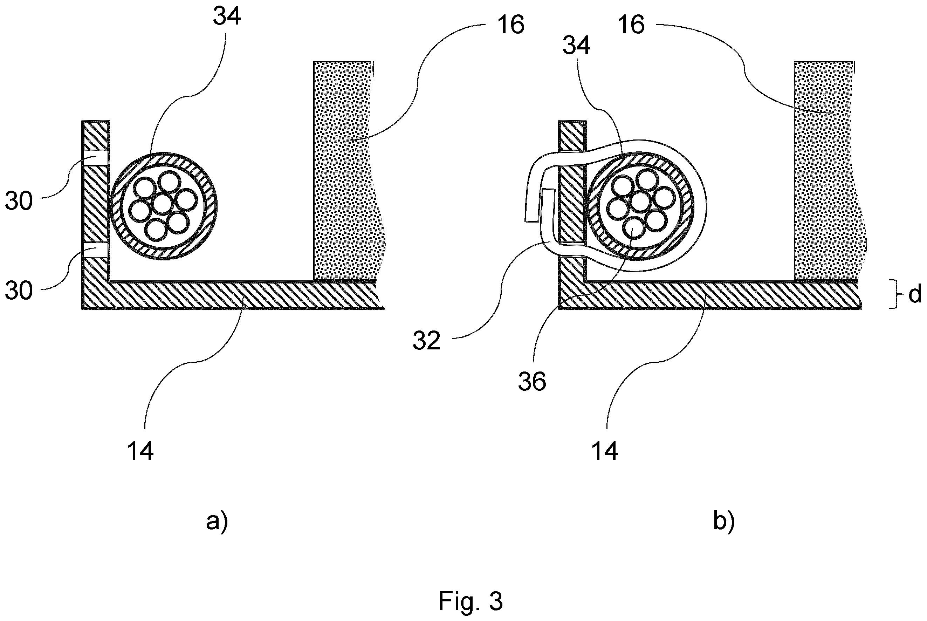

In preferred embodiments as shown in figures 2 and 3, the connector sections 20 each have pairs of holes 30, the holes 30 of a pair being spaced from each other in the radial direction of the spacing collar 10. As shown in figure 3b, the holes 30 serve for attaching a cable or a tube to a spacing collar 10 by means of a zip tie 32 or the like. The holes 30 are spaced from the aperture 22 in a longitudinal direction of the spacing collar 10.

Figure 2 illustrates a spacing collar 10 with a cable 34 comprising optical wave guides 36 (optical fibers) held by the connector sections 20 of the spacing collar 10.

On the inside of each bracket segment 14, elastic pads 24 are arranged that may compensate for diameter deviations of the outside diameter of a tube to be equipped with a spacing collar 10 as shown in Fig. 1. The elastic pads 24 preferably are made from heavy-duty rubber.

As mentioned above, the spacer shell segment 16 are preferably made from fiber reinforced plastics (FRP). Accordingly, the spacershell segment 16 are made from a composite material that comprises a thermoset resin matrix, preferably polyester, vinyl ester or epoxy resin, wherein fibers, preferably glass fibers or basalt fibres are embedded. Preferably, the spacer shell segments 16 comprise different layers with at least an inner layer being attached to the bracket segment with higher structural composite strength for stability of the spacer system and an outer layer from the outer surface 26 of the spacer shell segment 16 for optimized abrasion performance.

### Reference numerals:

- 10: Spacer collar
- 12: Collar segments
- 14: Bracket segment
- 16: Spacer shell segment
- 18: Carrier section
- 20: Connector section
- 22: Aperture
- 24: Elastic pads
- 26: Outer surface
- 28: Bevels
- 30: holes for holding a zip tie or the like
- 32: zip tie or wire for attaching a cable or tube to the connector section
- 34: cable or tube
- 36: optical fibers

## Claims

1. On-site applicable spacing collar (10) comprising at least two circumferential collar segments (12), each collar segment comprising a bracket segment (14) made of metal or composite plastic and a spacer shell segment (16) comprising fiber-reinforced plastic,
wherein each spacer shell segment is attached to a respective bracket segment and extends radially outwardly from the respective bracket segment when the spacing collar is applied to a pipe,
wherein each bracket segment comprises a carrier section (18) that in use extends along a circumference of a cylindrical pipe,
wherein the spacer shell segment (16) is attached to the carrier section (18) of the bracket segment (14),
wherein the bracket segment (14) comprises two connector sections (20), one connector section (20.1) being arranged at a first circumferential end of the carrier section while the other connected section (20.2) is arranged at the other, second circumferential end of the carrier section (18); and
wherein the connector sections (20) of the bracket segments (14) are configured to be fastened to one another.

2. Spacing collar according to claim 1, wherein the connector sections each extend outwardly in a radial direction with respect to the spacing collar.

3. Spacing collar according to claim 2, wherein each connector section (20) comprises an aperture (22) for receiving a screwing bolt for fastening the connector sections to one another.

4. Spacing collar according to at least one of claims 1 to 3, wherein the bracket segments (14) are provided with elastic pads (24) that are arranged on an inner surface of a respective carrier section (18).

5. Spacing collar according to at least one of claims 1 to 4, wherein the spacer shell segments (16) are attached to the carrier sections (18) of the respective bracket segments by way of fastening means such as screws or bolts.

6. Spacing collar to at least one of claim 1 to 5, wherein the spacing segments (16) are made from a composite material, comprising a thermoset resin matrix and fibers embedded therein.

7. Spacing collar according to at least one of claims 1 to 6, wherein the connector section comprises at least two holes (30) that are spaced from each other in a radial direction of the spacing collar (10) and that are configured for receiving a zip tie or a wire or the like for attaching a cable or tube (34) to the connector section (20).

8. Spacing collar in particular according to at least one of claims 1 to 7, comprising at least one spacer shell or spacer shell segment (16) at least partially made from fibre reinforced plastic material, said fibre reinforced plastic material being arranged adjacent to an outer surface of the spacing collar, wherein the fibre reinforced plastic material comprises a plastic matrix and fibres and optionally other materials, said fibres and said other materials being embedded in the plastic matrix.

9. Spacing collar according to claim 8, wherein the fibres comprise at least one of glass fibres or basalt fibres.
